# EUROPÄISCHE PATENTSCHRIFT

(11) **EP 4 606 681 B1**
(45) Veröffentlichungstag und Bekanntmachung des Hinweises auf die Patenterteilung: **17.12.2025**
(21) Anmeldenummer: 24159146.0
(22) Anmeldetag: 22.02.2024
(51) Int. Cl.: B62D 21/15, B62D 21/11, B62D 27/02

(54) **VERBINDUNG EINES ACHSHILFSRAHMENS MIT EINEM LÄNGSPROFIL**
CONNECTION OF AN AXLE SUPPORT FRAME WITH A LONGITUDINAL PROFILE
LIAISON D'UN CADRE D'AIDE À L'ESSIEU À UN PROFIL LONGITUDINAL

(43) Veröffentlichungstag der Anmeldung: 27.08.2025
(73) Patentinhaber: Benteler Automobiltechnik GmbH, 33102 Paderborn (DE)
(72) Erfinder: PAPE, Ralf, 33102 Paderborn (DE); SVOBODA, Tomas, 46015 Liberec (CZ); STASTNY, Peter, 33129 Delbrück (DE)
(74) Vertreter: Ksoll, Peter

(56) Entgegenhaltungen:
- US-A1- 2006 033 363
- US-A1- 2007 132 223
- US-A1- 2020 307 699
- US-A1- 2023 347 981

## Beschreibung

Die Erfindung betrifft eine Verbindungsanordnung eines Achshilfsrahmens mit einem Längsprofil gemäß den Merkmalen im Oberbegriff von Anspruch 1.

Achshilfsrahmen kommen zur Anbindung einer Achse an eine Karosserie eines Kraftfahrzeugs zum Einsatz. Insbesondere lenkbare Vorderachsen von Kraftfahrzeugen weisen üblicherweise einen Achshilfsrahmen auf, an dem beidseitig radführende Querlenker angeordnet sind. Bekannte Achshilfsrahmen sind als mehrteilige Blechkonstruktionen ausgebildet und weisen beispielsweise zwei Längsträger, die durch Querträger verbunden sind und Montage- bzw. Anbindungspunkte für Anbaukomponenten auf. Auch kann ein Achshilfsrahmen zwei zusammengesetzte Hilfsrahmenteile aufweisen, die auch als Hilfsrahmenoberteil und Hilfsrahmenunterteil bezeichnet werden, wobei die zusammengesetzten Hilfsrahmenteile Längsprofile bzw. Längsprofilabschnitte und Querprofile bzw. Querprofilabschnitte des Achshilfsrahmens bilden.

Mehrere Längsprofile eines Achshilfsrahmens können untereinander zu einer Längsprofilbaugruppe oder Längsprofilanordnung verbunden sein. In diesem Zusammenhang ist es bekannt, dass ein Längsprofilabschnitt eines ersten Längsprofils in einen Längsprofilabschnitt eines zweiten Längsprofils des Achshilfsrahmens bis zur Anlage an einem Anschlag eingeführt ist. Der Anschlag bildet eine Verrutschsperre. Diese wird häufig durch ein Schottblech realisiert, welches im zweiten Längsprofil gefügt ist, üblicherweise eingeschweißt ist. Die Schweißnähte bilden dabei jedoch potentielle Schwachstellen. Auch kosten-, gewichts- und fertigungstechnisch bringen zusätzliche Schottbleche oder separate mit einem Längsprofil gefügte Anschlagbauteile nicht die besten Voraussetzungen mit sich.

Die US 2023/347981 A1 offenbart einen Strukturkomponenten-Knoten, ein Crashbox-Verbindungsstück und ein Crash-Extender-Verbindungsstück, die jeweils eine obere Platte aufweisen, die sich in einer im Wesentlichen horizontalen Ebene erstreckt und es ermöglicht, den Crash-Extender und die Crashbox direkt miteinander zu verbinden.

Der Erfindung liegt die Aufgabe zugrunde, eine fertigungs- und bauteiltechnisch vorteilhaften und für den betrieblichen Einsatz, insbesondere im Crashfall bei einem Anprall in Fahrzeuglängsachse, verbesserte Verbindungsanordnung eines Achshilfsrahmens mit einem Längsprofil aufzuzeigen.

Die Lösung dieser Aufgabe besteht nach der Erfindung in einer Verbindungsanordnung gemäß Anspruch 1.

Vorteilhafte Ausgestaltungen, Weiterbildungen des erfindungsgemäßen Achshilfsrahmens sind Gegenstand der abhängigen Ansprüche.

Ein Achshilfsrahmen dient zur Anbindung einer Achse an eine Karosserie eines Kraftfahrzeugs. Der Achshilfsrahmen weist einen Längsprofilabschnitt auf. In diesen Längsprofilabschnitt des Achshilfsrahmens ist ein Längsprofil eingeführt bis der Längsprofilabschnitt des Längsprofils an einem Anschlag zur Anlage gelangt.

Erfindungsgemäß ist der zumindest eine Anschlag in einer Wand des Längsprofilabschnitts des Achshilfsrahmens durch eine nach innen geformten Verprägung gebildet.

Der Längsprofilabschnitt des Achshilfsrahmens, welcher den Längsprofilabschnitt des Längsprofils aufnimmt, ist zumindest mittelbarer Bestandteil eines Längsprofils des Kraftfahrzeughilfsrahmens.

Das in den Längsprofilabschnitt des Kraftfahrzeughilfsrahmens eingeführte Längsprofil wird nachfolgend erstes Längsprofil bezeichnet. Das Längsprofil des Kraftfahrzeughilfsrahmens wird nachfolgend zweites Längsprofil genannt. Die Verbindung des Kraftfahrzeughilfsrahmens und des Längsprofils bildet eine Verbindungsanordnung.

Der Anschlag bildet eine Wegbegrenzung für das erste Längsprofil im Längsprofilabschnitt des Achshilfsrahmens. Dies ist bereits bei der Montage der Anordnung vorteilhaft. Das erste Längsprofil kann in den Längsprofilabschnitt des Achshilfsrahmens eingeschoben werden, bis es am Anschlag zur Anlage gelangt. Die beiden Längsprofilabschnitte werden dann relativ zueinander positioniert, in die vorgegebene bzw. korrekte Montagelage gebracht und in dieser Position miteinander gefügt. Dies erfolgt insbesondere durch Schraubverbindungsmittel. Auch im Falle eines Frontalcrashs oder einer Belastung der Verbindungsanordnung in Fahrzeuglängsachse (x-Achse) unterbindet der Anschlag ein Verrutschen des ersten Längsprofils in Fahrzeuglängsachse bzw. wirkt einem Verrutschen entgegen und stellt sicher bzw. trägt dazu bei, dass sich das erste Längsprofil definiert zusammenfalten kann. Das erste Längsprofil ist dafür eingerichtet und bestimmt, bei einer Axialbelastung in Längsachse der Anordnung energieabsorbierend zu deformieren. Der Anschlag und die Befestigung des ersten Längsprofils im zweiten Längsprofil wirken dabei einer Verlagerung des ersten Längsprofils in das zweite Längsprofil entgegen.

Vorzugsweise weist die nach innen geformte Verprägung eine Schneidkante auf, welche Bestandteil des Anschlags bildet. Die Schneidkante verläuft auf der zum ersten Längsprofil gerichteten Seite der Verprägung.

Insbesondere ist der zumindest eine Anschlag in einer Wand des zweiten Längsprofils durch eine Schneidkante an der nach innen geformten Verprägung gebildet.

Der erfindungsgemäß vorgesehene zumindest eine Anschlag ist einseitig geschlitzt und nach innen, in Richtung zum Innenraum des zweiten Längsprofils verprägt. Auf diese Weise wird eine glatte und präzise Anschlagfläche an der Schneidkante gewährleistet. Der Anschlag an der Schneidkante stellt eine präzise Wegbegrenzung für ein eingeführtes bzw. eingestecktes erstes Längsprofil dar. Die beiden Längsprofile werden zusätzlich gefügt, insbesondere miteinander verschraubt.

Zur Herstellung des Anschlags wird eine Wand des zweiten Längsprofils eingeschlitzt. Ein an den Schlitz bzw. Einschnitt angrenzender Wandbereich wird nach innen in das Längsprofil geformt und eine Verprägung ausgebildet. Die Verprägung bildet eine in die Wand des zweiten Längsprofils gedrückte Stufe mit einer definierten Form. Die Schneidkante an der nach innen gedrückten Stufe bzw. Verprägung bildet den Anschlag. Die Verprägung mit dem durch die Schneidkante gebildeten Anschlag, springt nach innen in den Hohlraum des zweiten Längsprofils gegenüber der Innenfläche des Längsprofils vor.

Das erste Längsprofil kann ein Deformationselement sein. Als Deformationselement ist das erste Längsprofil dafür eingerichtet und bestimmt, aus einem Anprall resultierende Energie zu absorbieren und in Verformungsarbeit umzuwandeln.

Das zweite Längsprofil ist zumindest mittelbarer Bestandteil des Achshilfsrahmens. Vorzugsweise ist das zweite Längsprofil integraler Teil des Achshilfsrahmens.

Die beiden Längsprofile sind miteinander gefügt. Insbesondere sind das erste Längsprofil und das zweite Längsprofil durch Schraubverbindungsmittel verbunden. Insbesondere handelt es sich bei den Schraubverbindungsmittel um Bolzen, welche Wände des ersten Längsprofils und Wände des zweiten Längsprofils durchsetzen und mittels äußerer Schraubenmuttern verspannt werden.

Das im zweiten Längsprofil aufgenommene Ende des ersten Längsprofils kann mit einem axialen Abstand zum Anschlag angeordnet bzw. positioniert und dieser Montagelage festgelegt sein. Dies erfolgt über Verbindungsmittel, bei denen es sich insbesondere um Schraubverbindungsmittel handelt. Der Abstand zwischen dem Ende des ersten Längsprofils und dem Anschlag beträgt maximal 5 mm und vorzugsweise mindestens 1 mm. Der Abstand ist folglich zwischen 5 mm, bevorzugt zwischen 3 mm und 1 mm bemessen.

Eine vorteilhafte Ausgestaltung sieht vor, dass zumindest in einer Wand des zweiten Längsprofils eine nach innen geformte Sicke vorgesehen ist. Eine Sicke ist eine nach innen in das Innere des zweiten Längsprofils gerichtete rinnenförmige Vertiefung. Eine Sicke ist insbesondere in einer Wand vorgesehen, welche an die Wand angrenzt, in der sich der Anschlag befindet. Eine Sicke kann auch in der Wand vorgesehen sein, welche der Wand mit dem Anschlag gegenüberliegt.

Eine Sicke verläuft insbesondere quer zur Längsachse des zweiten Längsprofils. Eine Sicke hat eine Länge, die sich insbesondere über mehr als die Hälfte der Höhe bzw. Breite einer Wand des zweiten Längsprofils erstreckt.

Das erste Längsprofil und/oder das zweite Längsprofil können aus Stahl bestehen. Ebenso können das erste Längsprofil und/oder das zweite Längsprofil aus einem Aluminiumwerkstoff bestehen. Auch Mischlösungen Stahl/Aluminium sind möglich.

Das zweite Längsprofil besteht insbesondere aus Stahl. Das erste Längsprofil kann einteilig oder mehrteilig sein. Bei einer mehrteiligen Ausführung ist das erste Längsprofil aus miteinander gefügten Stahlbauteilen, wie beispielsweise schalenförmigen Bauteilen, zusammengesetzt.

Das erste Längsprofil kann aus einem Leichtmetallwerkstoff, insbesondere aus einem Aluminiumguss oder aus Aluminiumblechschalen gefertigt sein.

Das erste Längsprofil kann ein stranggepresstes Hohlprofil sein. Vorzugsweise ist das erste Längsprofil ein stranggepresstes umfangseitig geschlossenes Hohlprofil.

In der den Anschlag bildenden Schneidkante kann eine Ausnehmung vorgesehen sein. Bei der Ausnehmung handelt es sich um eine Funktionsöffnung. Die Ausnehmung kann Zentrierfunktionen haben oder als Freimachung zur Verbesserung eines Tauchlackiervorgangs dienen.

Es können ein oder mehrere Anschläge im zweiten Längsprofil vorgesehen sein.

Eine Ausgestaltung sieht vor, dass ein erster Anschlag und ein zweiter Anschlag vorgesehen sind, wobei die Anschläge in einander gegenüberliegenden Wänden des zweiten Längsprofils ausgebildet sind.

Eine weitere vorteilhafte Ausgestaltung sieht vor, dass die Schneidkante und eine bezogen auf die Einführöffnung des zweiten Längsprofils vordere Längskante einer Sicke in einer vertikalen Mittelquerebene des zweiten Längsprofils liegen. Das erste Längsprofil kommt dann mit dem in dem Längsprofilabschnitt des zweiten Längsprofils eingeschobenen Längsprofilabschnitt an der Schneidkante bzw. dem Anschlag zur Anlage. Zusätzlich stößt das Längsprofil an die vordere Kante einer Sicke. Die Sicken unterstützen die Fixierung des ersten Längsprofils im zweiten Längsprofil und wirken sich vorteilhaft auf das Deformationsverhalten des ersten Längsprofils aus.

Praktisch vorteilhaft ist eine Ausgestaltung, bei der der Längsprofilabschnitt des ersten Längsprofils formschlüssig in den Längsprofilabschnitt des zweiten Längsprofils passt.

Der Längsprofilabschnitt des zweiten Längsprofils ist dazu eingerichtet und bestimmt, den Längsprofilabschnitt des ersten Längsprofils aufzunehmen. Hierbei weist der Längsprofilabschnitt des ersten Längsprofils quer zur Längsachse (x-Achse) des ersten Längsprofils eine Querschnittsfläche von gleicher Querschnittskontur wie der Längsprofilabschnitt des zweiten Längsprofils auf, jedoch mit kleinerer Querschnittsfläche als der Längsprofilabschnitt des zweiten Längsprofils. Der Längsprofilabschnitt des ersten Längsprofils ist dergestalt ausgebildet, dass er formschlüssig in den Längsprofilabschnitt des zweiten Längsprofils passt und dort mittels Verbindungsmitteln festgelegt werden kann.

Insbesondere weisen sowohl der Längsprofilabschnitt des ersten Längsprofils als auch der Längsprofilabschnitt des zweiten Längsprofils eine rechteckige Querschnittskontur auf.

Die Erfindung ist nachfolgend anhand von Zeichnungen näher beschrieben. Es zeigen:
- Figur 1: einen Achshilfsrahmen in perspektivischer Darstellung und die erfindungsgemäße Verbindungsanordnung zwischen dem Achshilfsrahmen und einem Längsprofil;
- Figur 2: einen Ausschnitt aus einem Achshilfsrahmen mit der Darstellung von zwei miteinander verbundenen Längsprofilen ebenfalls in einer Perspektive;
- Figur 3: den Ausschnitt entsprechend der Darstellung von Figur 2 aus einer anderen Perspektive;
- Figur 4: technisch vereinfacht einen Schnitt durch eine erste Ausführungsform einer Anordnung zur Verbindung von zwei Längsprofilen eines Achshilfsrahmens;
- Figur 5: technisch schematisiert einen Schnitt durch eine zweite Ausführungsform einer Anordnung zur Verbindung von zwei Längsprofilen eines Achshilfsrahmens;
- Figur 6: in einer perspektivischen Ansicht schräg von unten ein zweites Längsprofil;
- Figur 7: das zweite Längsprofil entsprechend der Darstellung von Figur 6 mit einem in das zweite Längsprofil eingeführten zweiten Längsprofil und
- Figur 8: in perspektivischer Darstellungsweise einen Achshilfsrahmen in Form eines Vorderachsträgers eines Kraftfahrzeugs.

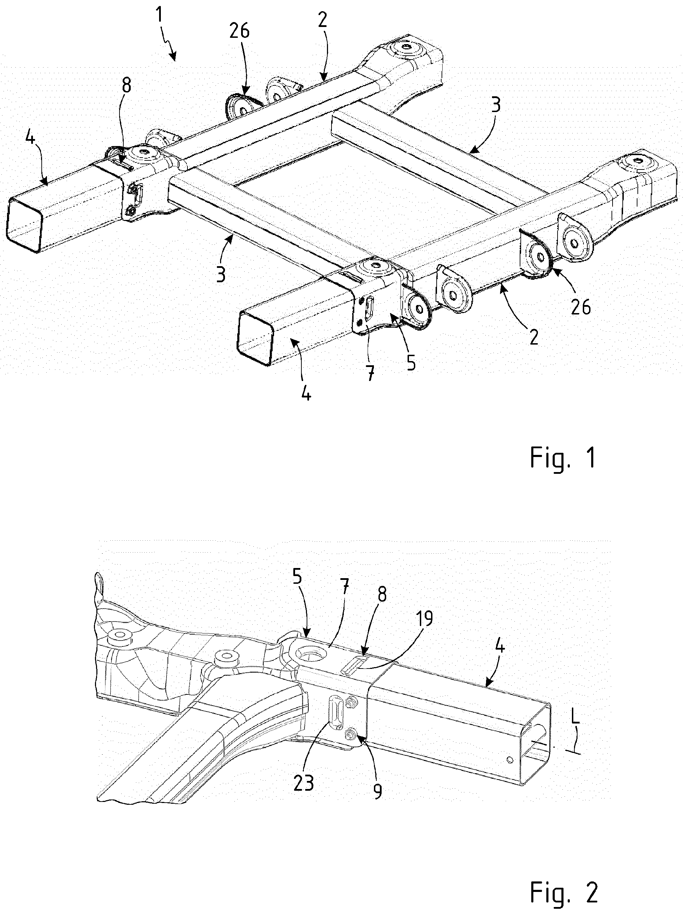

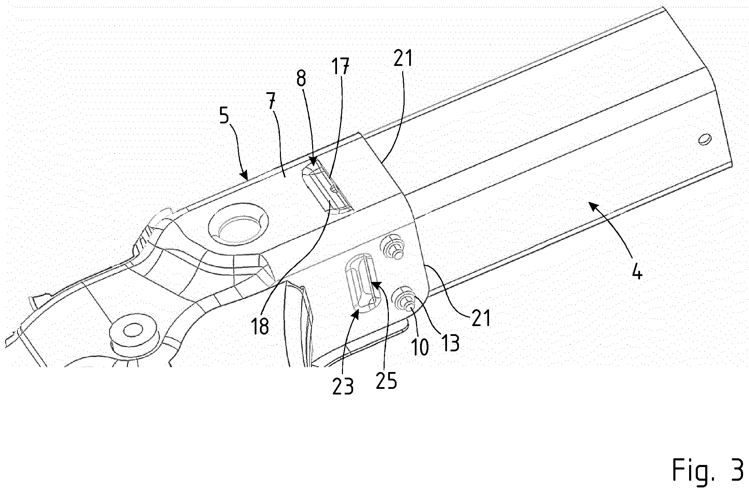

In den Figuren 1 bis 8 werden für gleiche oder funktionell einander entsprechende Bauteile bzw. Bauteilkomponenten die gleichen Bezugszeichen verwendet.

Die Figur 1 zeigt einen Achshilfsrahmen 1, der im Wesentlichen aus zwei bezogen auf die Einbaulage in einem Kraftfahrzeug in Fahrzeuglängsachse (x-Achse) parallel zueinander angeordnete Längsträger 2 und zwei Querträger 3 gebildet ist und seitliche Anbindungsknoten bzw. Flansche 26 zur Kopplung von bzw. mit Lenkern eines Kraftfahrzeugs aufweist.

Jeder Längsträger 2 ist mit einem vorderen ersten Längsprofil 4 verbunden. Jeder Längsträger 2 des Achshilfsrahmens 1 weist ein Längsprofil 5 auf. Das Längsprofil 5 eines Längsträgers 2 wird nachfolgend zweites Längsprofil 5 genannt. Das erste Längsprofil 4 ist mit einem Längsprofilabschnitt 6 in einen Längsprofilabschnitt 7 des zweiten Längsprofils 5 eingeführt, bis es an einem Anschlag 8 zur Anlage kommt.

Die Längsprofilabschnitte 6, 7 sind miteinander gefügt. Dies erfolgt über Schraubverbindungsmittel 9, welche das erste Längsprofil 4 und das zweite Längsprofil 5 verbinden. Hierzu sind Bolzen 10 durch Wände 11 des ersten Längsprofils 4 und Wände 12 des zweiten Längsprofils 5 geführt. Die Bolzen 10 durchsetzen die Wände 11, 12 und sind mittels Schraubenmuttern 13 verspannt. Durchführöffnungen zur Durchführung der Bolzen 10 in den seitlichen Wänden 11 bzw. 12 des ersten Längsprofils 4 bzw. des zweiten Längsprofils 5 sind mit dem Bezugszeichen 14 bezeichnet. Die Durchführöffnungen 14 im ersten Längsprofil 4 und im zweiten Längsprofil 5 kommunizieren miteinander in der Einbaulage.

Im dargestellten Ausführungsbeispiel ist das erste Längsprofil 4 ein einstückiges stranggepresstes Hohlprofil von rechteckigem Querschnitt. Das zweite Längsprofil 5 ist mehrteilig ausgeführt und weist einen im Querschnitt C- bzw. U-förmigen Schalenkörper 15 und ein unterseitiges Schließblech 16 auf, die miteinander stoffschlüssig gefügt sind.

Der Anschlag 8 ist in einer Wand 12 des zweiten Längsprofils 5 durch eine Schneidkante 17 an einer nach innen geformten Verprägung 18 gebildet. Hierzu ist die Wand 12 des zweiten Längsprofils 5 eingeschlitzt und im an den Schlitz 19 angrenzenden hinteren Bereich nach innen, also in den Hohlraum des zweiten Längsprofils 5 geformt. Der Schlitz 19 durchtrennt die Wand 12 des zweiten Längsprofils 5 auf ihrer gesamten Wandstärke und erstreckt sich quer zur Längsachse L des zweiten Längsprofils 5. Die Verprägung 18 mit der in Richtung zur Öffnung 20 des zweiten Längsprofils 5 gerichteten Schneidkante 17 bilden einen stufenförmigen Anschlag 8. An dem Anschlag 8 kommt das erste Längsprofil 4 zur Anlage. Der Anschlag 8 bildet eine glatte präzise Anschlagfläche für das erste Längsprofil 4 im zweiten Längsprofil 5.

Relativ zueinander in der Montagelage ausgerichtet, werden das erste Längsprofil 4 und das zweite Längsprofil 5 miteinander verschraubt. Der Anschlag 8 erleichtert die Einstellung der Montagelage. Das erste Längsprofil 4 kann in das zweite Längsprofil 5 bis zur Anlage an den Anschlag 8 eingeführt werden. Anschließend erfolgt die Positionierung in die korrekte Montagelage. Hierbei kann der Anschlag 8 zum innenliegenden, also anschlagseitigen Ende 27 des ersten Längsprofils 4 einen Abstand a aufweisen. Der Abstand a ist vorzugsweise zwischen maximal 5 mm, bevorzugt maximal 3 mm und mindestens 1 mm bemessen. Der Abstand a ist gemessen von der Schneidkante 17 der Verprägung 18 bzw. einer vorderen Prägekante der Verprägung 18, an welchem die Verprägung 18 beginnt und als Anschlag 8 fungiert.

Der Schlitz 19 zur Herstellung des Anschlags 8 ist quer zur Längsachse L des zweiten Längsprofils 5 gerichtet. Insbesondere verläuft der Schlitz 19 parallel zur vorderen Stirnkante 21 einer Wand 12 des zweiten Längsprofils 5.

Das erste Längsprofil 4 kann ein Deformationselement sein.

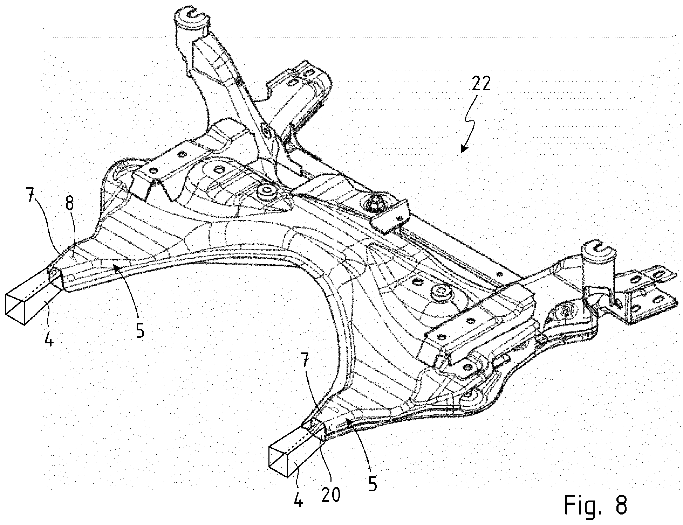

Das zweite Längsprofil 5 ist zumindest mittelbarer Bestandteil eines Längsträgers 2 des Achshilfsrahmens 1. Ein Achshilfsrahmen 1 in Form eines Vorderachsträgers 22 ist in der Figur 8 dargestellt. Die Figur 8 zeigt den Vorderachsträger 22, dessen Bestandteil das zweite Längsprofil 5 mit dem vorderen Längsprofilsabschnitt 7 ist. In der oberen Wand 12 des Längsprofilabschnitts 7 ist der Anschlag 8 gebildet. Die Verprägung 18 ist kreisabschnittsförmig ausgeführt. Der Schnitt 19 verläuft gerade quer zur Längsachse L des zweiten Längsprofils 5. Der Vorderachsträger 22 weist in Bildebene rechts und links jeweils ein zweites Längsprofil 5 mit einem vorderen Längsprofilabschnitt 7 auf. Jeweils ein erstes Längsprofil 4 ist mit einem zweiten Längsprofil 5 des Vorderachsträgers 22 verbunden. Hierzu ist ein in der Figur 8 nicht zu erkennender Längsprofilabschnitt des ersten Längsprofils 4 in den vorderen Längsprofilabschnitt 7 eingeführt bis er am Anschlag 8 zur Anlage gelangt. Nachdem das erste Längsprofil 4 relativ zum zweiten Längsprofil 5 und dem vorderen Längsprofilabschnitt 7 in der Montagelage positioniert ist, werden die Bauteile miteinander gefügt. Dies erfolgt über Verbindungsmittel, vorzugsweise Schraubverbindungsmittel, welche Wandabschnitte des Längsprofilabschnitts 6 und des Längsprofilabschnitts 7 durchsetzen.

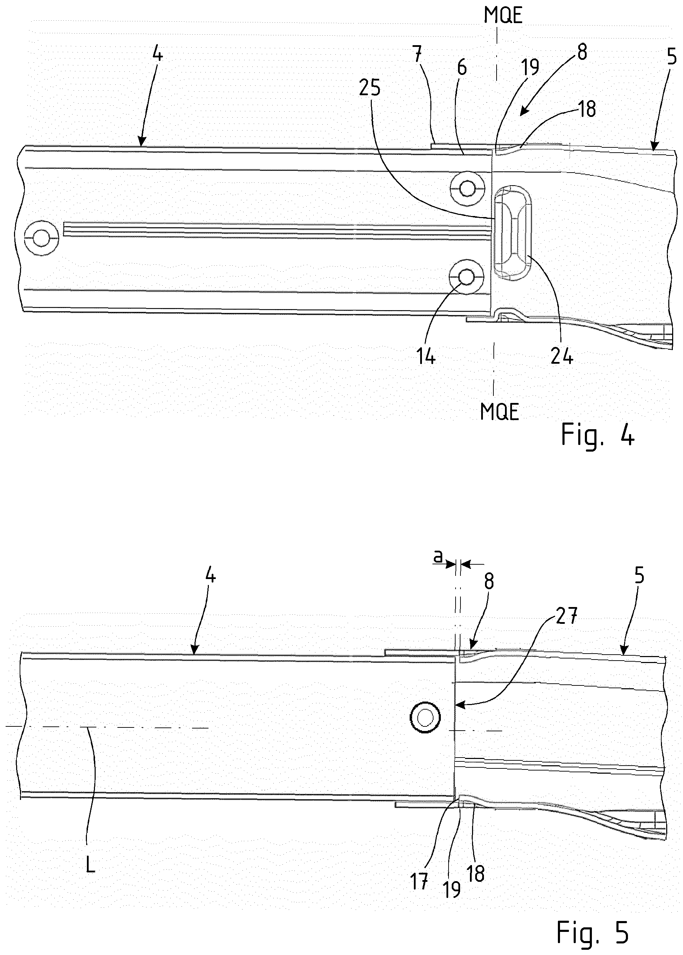

Bei dem in der Figur 4 dargestellten Ausführungsbeispiel sind zwei Anschläge 8 vorgesehen. Ein Anschlag 8 ist in der oberen Wand 12 des zweiten Längsprofils 5 ausgebildet. Ein zweiter Anschlag 8 ist in der gegenüberliegenden unteren Wand 12 des zweiten Längsprofils 5 ausgebildet.

In einer Wand 12 des zweiten Längsprofils 5 ist eine nach innen geformte Sicke 23 vorgesehen. Bei der Sicke 23 handelt es sich um eine rinnenartige Vertiefung, die in die Wand 12 des zweiten Längsprofils 5 gedrückt bzw. geprägt ist. Die Sicke 23 verläuft quer zur Längsachse L (x-Achse) des zweiten Längsprofils 5. Eine Sicke 23 bzw. mehrere Sicken 23 sind insbesondere in den Ausführungsbeispielen gemäß den Darstellungen der Figuren 2 bis 4 sowie 6 und 7 dargestellt.

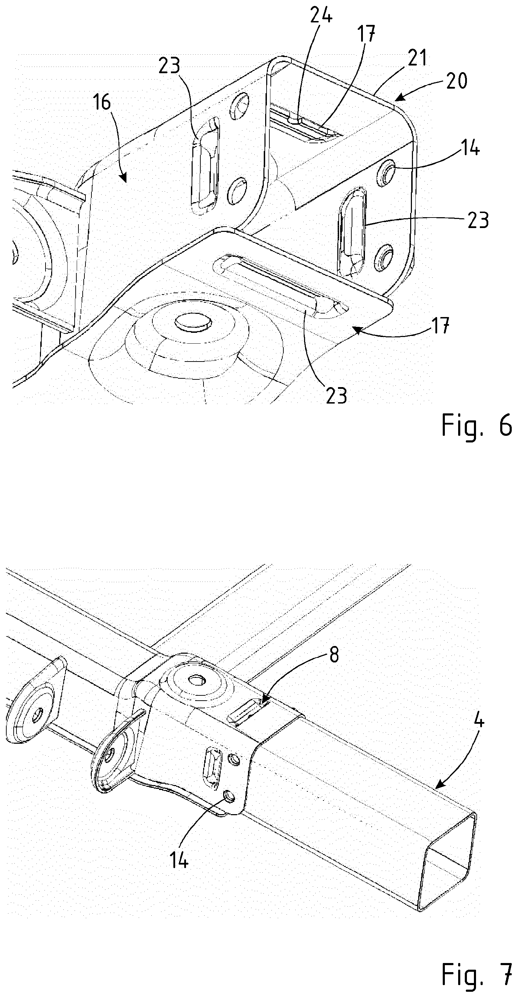

Die Figur 6 zeigt eine Ansicht auf den Innenraum eines zweiten Längsprofils 5. In der oberen Wand 12 des zweiten Längsprofils 5 ist der Anschlag 8 ausgebildet. In den seitlichen Wänden 12, ebenso wie in der unteren Wand 12, welche Bestandteile des Schließblechs 16 ist, sind Sicken 23 eingeformt. In der Schneidkante 17 der Verprägung 18 ist eine Ausnehmung 24 vorgesehen.

Die Schneidkante 17 und eine bezogen auf die Öffnung 20 des zweiten Längsprofils 5 vordere Längskante 25 einer Sicke 23, liegen in einer vertikalen Mittelquerebene MQE des zweiten Längsprofils 5. In dieser Konfiguration ergänzen sich die Schneidkante 17 und die vorderen Längskanten 24 der Sicken 23 bei der Lagepositionierung und Fixierung des Längsprofilabschnitts 6 des ersten Längsprofils 4 in dem Längsprofilabschnitt 7 des zweiten Längsprofils 5.

Der Längsprofilabschnitt 6 des ersten Längsprofils 4 passt formschlüssig in den Längsprofilabschnitt 7 des zweiten Längsprofils. Der Längsprofilabschnitt 6 des ersten Längsprofils 4 weist eine Querschnittsfläche von gleicher Querschnittskontur wie der Längsprofilsabschnitt 7 des zweiten Längsprofils 5 auf. Die Querschnittskonturen sind rechteckig, wobei die Querschnittsfläche des Längsprofilsabschnitts 6 des ersten Längsprofils 4 kleiner ist als die Querschnittsfläche des Längsprofilsabschnitts 7 des zweiten Längsprofils 5.

### Bezugszeichen:

- 1 -: Achshilfsrahmen
- 2 -: Längsträger
- 3 -: Querträger
- 4 -: erstes Längsprofil
- 5 -: zweites Längsprofil
- 6 -: Längsprofilabschnitt v. 4
- 7 -: Längsprofilabschnitt v. 5
- 8 -: Anschlag
- 9 -: Schraubverbindungsmittel
- 10 -: Bolzen
- 11 -: Wand v. 4
- 12 -: Wand v. 5
- 13 -: Schraubenmutter
- 14 -: Durchführöffnung
- 15 -: Schalenkörper
- 16 -: Schließblech
- 17 -: Schneidkante
- 18 -: Verprägung
- 19 -: Schlitz
- 20 -: Öffnung
- 21 -: Stirnkante
- 22 -: Vorderachsträger
- 23 -: Sicke
- 24 -: Ausnehmung
- 25 -: vordere Längskante von 23
- 26 -: Flansch
- 27 -: Ende v. 4

- L -: Längsachse
- MGE -: Mittelquerebene

## Patentansprüche

1. Verbindungsanordnung eines Achshilfsrahmens (1) mit einem ersten Längsprofil (4), wobei ein Längsprofilabschnitt (6) des ersten Längsprofils (4) in einen Längsprofilabschnitt (7) des Achshilfsrahmens (1) eingeführt ist, wobei im Längsprofilabschnitt (7) des Achshilfsrahmens (1) ein Anschlag (8) vorgesehen ist und der Längsprofilabschnitt (6) des ersten Längsprofils (4) und der Längsprofilabschnitt (7) des Achshilfsrahmens (1) miteinander gefügt sind, wobei der Achshilfsrahmen (1) ein zweites Längsprofil (5) aufweist und der Längsprofilabschnitt (7) zumindest mittelbarer Bestandteil des zweiten Längsprofils (5) ist **dadurch gekennzeichnet, dass** der zumindest eine Anschlag (8) in einer Wand (12) des zweiten Längsprofils (5) durch eine nach innen geformte Verprägung (18) gebildet ist.

2. Verbindungsanordnung nach Anspruch 1, **dadurch gekennzeichnet, dass** die Verprägung (18) eine Schneidkante (17) aufweist und die Schneidkante (17) Bestandteil des Anschlags (8) ist.

3. Verbindungsanordnung nach Anspruch 1 oder 2, **dadurch gekennzeichnet, dass** das erste Längsprofil (4) ein Deformationselement ist.

4. Verbindungsanordnung nach einem der Ansprüche 1 bis 3, **dadurch gekennzeichnet, dass** das erste Längsprofil (4) und das zweite Längsprofil (5) durch Bolzen (10) verbunden sind, welche Wände (11) des ersten Längsprofils (4) und Wände (12) des zweiten Längsprofils (5) durchsetzen.

5. Verbindungsanordnung nach einem der Ansprüche 1 bis 4, **dadurch gekennzeichnet, dass** in zumindest einer Wand (12) des zweiten Längsprofils (5) eine nach innen geformte Sicke (23) vorgesehen ist.

6. Verbindungsanordnung nach Anspruch 5, **dadurch gekennzeichnet, dass** die Sicke (23) quer zur Längsachse (L) des zweiten Längsprofils (5) verläuft.

7. Verbindungsanordnung nach einem der Ansprüche 1 bis 6, **dadurch gekennzeichnet, dass** das erste Längsprofil (4) und/oder das zweite Längsprofil (5) aus Stahl bestehen.

8. Verbindungsanordnung nach einem der Ansprüche 1 bis 6, **dadurch gekennzeichnet, dass** das erste Längsprofil (4) und/oder das zweite Längsprofil (5) aus einem Aluminiumwerkstoff bestehen.

9. Verbindungsanordnung nach einem der Ansprüche 1 bis 6, insoweit abhängig vom Anspruch 2 **dadurch gekennzeichnet, dass** in der Schneidkante (17) eine Ausnehmung (24) vorgesehen ist.

10. Verbindungsanordnung nach einem der Ansprüche 1 bis 7, **dadurch gekennzeichnet, dass** ein erster Anschlag (8) und ein zweiter Anschlag (8) in einander gegenüberliegenden Wänden (12) des zweiten Längsprofils (5) vorgesehen sind.

11. Verbindungsanordnung nach einem der Ansprüche 5 bis 10, insoweit abhängig vom Anspruch 2, **dadurch gekennzeichnet, dass** die Schneidkante (17) und eine bezogen auf die Öffnung (20) des zweiten Längsprofils (5) vordere Längskante (25) einer Sicke (23) in einer vertikalen Mittelquerebene (MQE) des zweiten Längsprofils (5) liegen.

12. Verbindungsanordnung nach einem der Ansprüche 1 bis 11, **dadurch gekennzeichnet, dass** der Längsprofilabschnitt (6) des ersten Längsprofils (4) formschlüssig in den Längsprofilabschnitt (7) des zweiten Längsprofils (5) passt.

13. Verbindungsanordnung nach einem der Ansprüche 1 bis 12, **dadurch gekennzeichnet, dass** das erste Längsprofil (4) ein stranggepresstes, umfangseitig geschlossenes Hohlprofil ist.

14. Verbindungsanordnung nach einem der Ansprüche 1 bis 13, **dadurch gekennzeichnet, dass** das im zweiten Längsprofil (5) aufgenommene Ende (27) des ersten Längsprofils (4) mit einem Abstand (a) zum Anschlag (8) angeordnet ist, wobei der Abstand (a) maximal 5 mm beträgt, bevorzugt maximal 3 mm beträgt, besonders bevorzugt mindestens 1 mm beträgt.

## Claims

1. Connection arrangement of an axle support frame (1) with a first longitudinal profile (4), wherein a longitudinal profile section (6) of the first longitudinal profile (4) is inserted into a longitudinal profile section (7) of the axle support frame (1), wherein an abutment (8) is provided in the longitudinal profile section (7) of the axle support frame (1) and the longitudinal profile section (6) of the first longitudinal profile (4) and the longitudinal profile section (7) of the axle support frame (1) are joined together, wherein the axle support frame (1) has a second longitudinal profile (5) and the longitudinal profile section (7) is at least an indirect component of the second longitudinal profile (5), **characterised in that** the at least one abutment (8) is formed in a wall (12) of the second longitudinal profile (5) by an inwardly shaped embossment (18).

2. Connection arrangement according to claim 1, **characterised in that** the embossment (18) has a cutting edge (17) and the cutting edge (17) is a component of the abutment (8).

3. Connection arrangement according to claim 1 or 2, **characterised in that** the first longitudinal profile (4) is a deformation element.

4. Connection arrangement according to any one of claims 1 to 3, **characterised in that** the first longitudinal profile (4) and the second longitudinal profile (5) are connected by bolts (10) which pass through walls (11) of the first longitudinal profile (4) and walls (12) of the second longitudinal profile (5).

5. Connection arrangement according to any one of claims 1 to 4, **characterised in that** an inwardly shaped bead (23) is provided in at least one wall (12) of the second longitudinal profile (5).

6. Connection arrangement according to claim 5, **characterised in that** the bead (23) runs transversely to the longitudinal axis (L) of the second longitudinal profile (5).

7. Connection arrangement according to any one of claims 1 to 6, **characterised in that** the first longitudinal profile (4) and/or the second longitudinal profile (5) consist of steel.

8. Connection arrangement according to any one of claims 1 to 6, **characterised in that** the first longitudinal profile (4) and/or the second longitudinal profile (5) consist of an aluminium material.

9. Connection arrangement according to any one of claims 1 to 6, dependent on claim 2 in this respect, **characterised in that** a recess (24) is provided in the cutting edge (17).

10. Connection arrangement according to any one of claims 1 to 7, **characterised in that** a first abutment (8) and a second abutment (8) are provided in opposing walls (12) of the second longitudinal profile (5).

11. Connection arrangement according to any one of claims 5 to 10, dependent on claim 2 in this respect, **characterised in that** the cutting edge (17) and a longitudinal edge (25) of a bead (23) located at the front in relation to the opening (20) of the second longitudinal profile (5) lie in a vertical central transverse plane (CTP) of the second longitudinal profile (5).

12. Connection arrangement according to any one of claims 1 to 11, **characterised in that** the longitudinal profile section (6) of the first longitudinal profile (4) fits in a form-fitting manner into the longitudinal profile section (7) of the second longitudinal profile (5).

13. Connection arrangement according to any one of claims 1 to 12, **characterised in that** the first longitudinal profile (4) is an extruded, circumferentially closed hollow profile.

14. Connection arrangement according to any one of claims 1 to 13, **characterised in that** the end (27) of the first longitudinal profile (4) received in the second longitudinal profile (5) is arranged at a distance (a) from the abutment (8), wherein the distance (a) is at most 5 mm, preferably at most 3 mm, particularly preferably at least 1 mm.

## Revendications

1. Ensemble de liaison d'un sous-châssis d'essieu (1) avec un premier profilé longitudinal (4), dans lequel une section de profilé longitudinal (6) du premier profilé longitudinal (4) est insérée dans une section de profilé longitudinal (7) du sous-châssis d'essieu (1), dans lequel une butée (8) est prévue dans la section de profilé longitudinal (7) du sous-châssis d'essieu (1) et la section de profilé longitudinal (6) du premier profilé longitudinal (4) et la section de profilé longitudinal (7) du sous-châssis d'essieu (1) sont assemblées entre elles, dans lequel le sous-châssis d'essieu (1) présente un deuxième profilé longitudinal (5) et la section de profilé longitudinal (7) constitue au moins une partie intégrante du deuxième profilé longitudinal (5), **caractérisé en ce que** ladite au moins une butée (8) est formée dans une paroi (12) du deuxième profilé longitudinal (5) par un estampage (18) formé vers l'intérieur.

2. Ensemble de liaison selon la revendication 1, **caractérisé en ce que** l'estampage (18) présente une arête de coupe (17) et l'arête de coupe (17) fait partie intégrante de la butée (8).

3. Ensemble de liaison selon la revendication 1 ou la revendication 2, **caractérisé en ce que** le premier profilé longitudinal (4) est un élément de déformation.

4. Ensemble de liaison selon l'une quelconque des revendications 1 à 3, **caractérisé en ce que** le premier profilé longitudinal (4) et le deuxième profilé longitudinal (5) sont reliés par des boulons (10) qui traversent des parois (11) du premier profilé longitudinal (4) et des parois (12) du deuxième profilé longitudinal (5).

5. Ensemble de liaison selon l'une des revendications 1 à 4, **caractérisé en ce qu'**une moulure (23) moulée vers l'intérieur est prévue dans au moins une paroi (12) du deuxième profilé longitudinal (5).

6. Ensemble de liaison selon la revendication 5, **caractérisé en ce que** la moulure (23) s'étend transversalement à l'axe longitudinal (L) du deuxième profilé longitudinal (5).

7. Ensemble de liaison selon l'une des revendications 1 à 6, **caractérisé en ce que** le premier profilé longitudinal (4) et/ou le deuxième profilé longitudinal (5) sont en acier.

8. Ensemble de liaison selon l'une des revendications 1 à 6, **caractérisé en ce que** le premier profilé longitudinal (4) et/ou le deuxième profilé longitudinal (5) sont en un matériau à base d'aluminium.

9. Ensemble de liaison selon l'une des revendications 1 à 6, dans la mesure où elles dépendent de la revendication 2, **caractérisé en ce qu'**un évidement (24) est prévu dans l'arête de coupe (17).

10. Ensemble de liaison selon l'une des revendications 1 à 7, **caractérisé en ce qu'**une première butée (8) et une deuxième butée (8) sont prévues dans des parois (12) opposées l'une à l'autre du deuxième profilé longitudinal (5).

11. Ensemble de liaison selon l'une des revendications 5 à 10, dans la mesure où elles dépendent de la revendication 2, **caractérisé en ce que** l'arête de coupe (17) et une arête longitudinale avant (25) d'une moulure (23) se trouvent, par rapport à l'ouverture (20) du deuxième profilé longitudinal (5), dans un plan médian transversal vertical (MQE) du deuxième profilé longitudinal (5).

12. Ensemble de liaison selon l'une des revendications 1 à 11, **caractérisé en ce que** la section de profilé longitudinal (6) du premier profilé longitudinal (4) s'intègre par complémentarité de forme à la section de profilé longitudinal (7) du deuxième profilé longitudinal (5).

13. Ensemble de liaison selon l'une des revendications 1 à 12, **caractérisé en ce que** le premier profilé longitudinal (4) est un profilé creux extrudé, fermé sur toute sa circonférence.

14. Ensemble de liaison selon l'une des revendications 1 à 13, **caractérisé en ce que** l'extrémité (27) du premier profilé longitudinal (4) logée dans le deuxième profilé longitudinal (5) est disposée à une distance (a) de la butée (8), dans lequel la distance (a) est au maximum de 5 mm, de manière préférée au maximum de 3 mm, et de manière particulièrement préférée au moins de 1 mm.
